# EUROPEAN PATENT APPLICATION

(11) **EP 2 562 628 A1**
(43) Date of publication of application: **27.02.2013**
(21) Application number: 11179060.6
(22) Date of filing: 26.08.2011
(51) Int. Cl.: G06F 3/048, G06F 3/041, G06F 3/044

(54) **Image scale alteration arrangement and method**

(71) Applicant: Sony Ericsson Mobile Communications AB, 221 88 Lund (SE)
(72) Inventor: Åberg, Peter, Vinslöv SE-288 31 (SE); Molinier, Olivier, SE-214 23 Malmö (SE); Bengtsson, Henrik, SE-227 36 Lund (SE)
(74) Representative: Valea AB

(57) **Abstract**

The invention relates to a user interaction arrangement (170) for interaction with a user using a pointing object, said arrangement comprising: a detector (151, 152, S1-S4) for detecting a force from said object, a controller (1711) for computing a force value on a surface of a display, an content generating part (1712) for generating a content on said surface of display. The controller is further configured to compute a position on said surface based on said force value, and the image generating part is configured to alter scale of said content on said surface of display based on said position and force.

## Description

### TECHNICAL FIELD

Implementations described herein relate generally to scale alternation, and more particularly, to devices that may provide detection of an object in vicinity and execute operations such as altering scale, based on the detection.

### BACKGROUND

Hand held devices, such as mobile phones, digital cameras, and pocket computers with graphical user interfaces have become increasingly popular in recent years. The most common example of a pocket computer is a smart phone, which may be embodied in various different forms.

Commonly hand held devices are also provided with cameras for recording and viewing images and movies.

The graphical display is typically touch-sensitive and may be operated by way of a pointing tool such as a stylus, pen or a user's finger.

The hand held device used as mobile terminals, i.e. in addition to providing typical pocket computer services such as calendar, word processing and games, they may also be used in conjunction with a mobile telecommunications system for services like voice calls, fax transmissions, electronic messaging, Internet browsing, etc.

It is well known in the field that because of the noticeably limited resources of pocket computers, in terms of physical size, display size, data processing power and input device, compared to laptop or desktop computers, user interface solutions known from laptop or desktop computers are generally not fully applicable or relevant for pocket computers. One example is enlarging or zooming-in parts of a content using a pointing device by choosing an area. However user interfaces developed for handheld equipment may be used of computers devices etc.

It is generally desired to provide improvements to the user interface of such pocket computers so as to enhance the user friendliness and improve the user's efficiency when using the pocket computer. In computers in general, and in pocket computers in particular, there is a need to navigate through content which is larger than what can be displayed on the current display. This is especially apparent when using a web browser application on a pocket computer, as web pages are usually designed to be displayed on normal computer displays being considerably larger than the displays of pocket computers.

In summary, a problem with the prior art in this respect is how to efficiently and intuitively zoom a portion of a displayed content on a hand-held device such as a pocket computer or a mobile communication device, in a simple but efficient manner without use of advanced hardware and complex software.

Some techniques use finger or stylus motion on the screen as a zoom command. For example when fingers are moved apart the display zooms in, i.e. enlarges portion of displayed image and when fingers are moved together, the display zooms out, i.e. the scale of the image is reduced.

One problem is that pinch zoom (using two fingers to zoom in and out) has low precision and requires two hands to operate, e.g. to hold the device with one hand and apply zooming operation with the other hand.

Three-dimensional sensing in a volume above the display of a device to detect gesture together with suitable user interface (UI) is supposed to become popular. The UI may be 3D as well and also be used together with a 3D display or a projector. Simultaneously the use of force to detect and the way to detect force on screen will be developed.

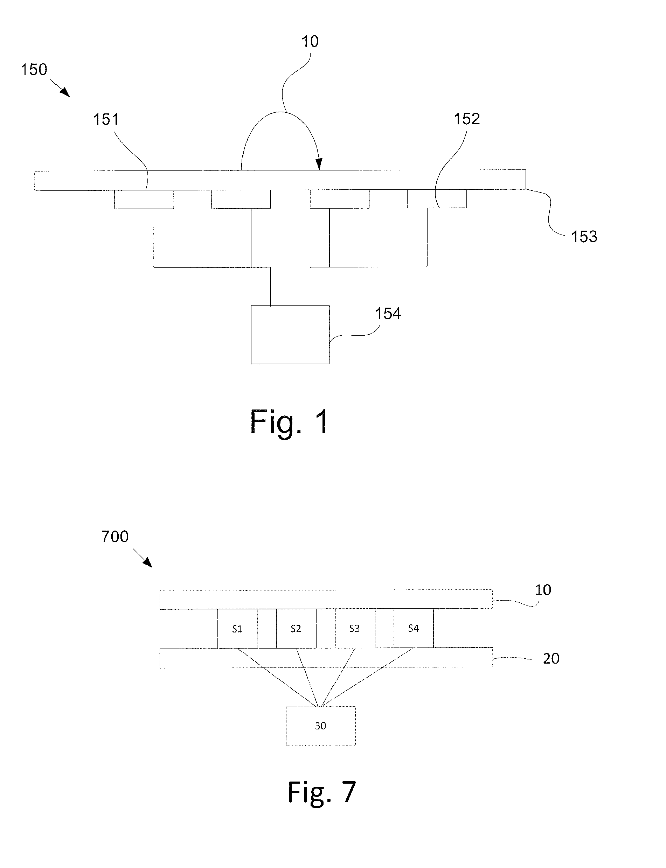

One method is to sense an object, e.g. a users hand, in a 3D volume is to use capacitive or electric field sensing. Fig. 1 illustrates a device 150 for capacitive and electric field sensing based on transmitting a signal 10 by means of one or several electrodes 151 and then receiving the response with another electrode(s) 152. The electrodes may be arranged behind a display layer 153 and controlled by a controller 154. If an object is close enough to the touch surface, a change in the capacitive coupling between the electrodes and the ground will be detected as the received signal strength will change. Other types of systems or displays 700 may sense the amount of force applied by user on the display surface, such as one illustrated in Fig. 7. Pressure sensing sensors S1-S4 may be located between a display surface 20 and a touch panel 10. The pressure sensing sensors outputs a pressure sensing signal by sensing the pressure of a finger/stylus pressing the touch panel. A control device 36 analyses a size of the pressure actuating on the pressure sensing sensors based on the pressure sensing signal. The control device calculates a contact location of the finger based on a size of the analysed force and amount of pressure or the location based on other commonly used method such as resistive or capacitive touch input.

### SUMMARY

One object of the present invention is to solve the above mentioned problems and provide an enhanced scale altering operation and/or speed.

Thus, a user interaction arrangement for interaction with a user using a pointing object is provided. The arrangement comprises: a detector for detecting a force from the object, a controller for computing a force value on a surface of a display, a content generating part for generating a content on the surface of display. The controller is further configured to compute a position on the surface based on the force value, and the image generating part is configured to alter scale of the content on the surface of display based on the position and force. According to one aspect of the invention the force applied by user is an amount of force on the surface by the pointing object. According to a second aspect of the invention, the force corresponds to a distance between the pointing object and the surface. According to the second aspect the arrangement comprises a capacitive electric field generator and receiver. According to the first aspect the arrangement comprises one or more force sensors. The arrangement may be used in a mobile terminal having a touch sensitive display. According to third aspect is system to detect users behaviour above the screen

The invention also relates to an electric device comprising a display, a communication portion and a user interaction arrangement. The arrangement is configured to detect a pointing object for interaction with the device, a controller for computing a force value on the display, and an image generating part for generating an image on the display. The controller is further configured to compute a position on the surface based on the force value, and the image generating part is configured to alter scale of the content on the surface of display based on the position and force. The device may be one of a mobile communication terminal, a camera, a global positioning system (GPS) receiver; a personal communications system (PCS) terminal, a personal digital assistant (PDA); a personal computer, a home entertainment system or a television screen. The object could be is a finger or stylus. In one embodiment the force is an amount of force on the surface by the pointing object. In a second embodiment the force corresponds to a distance between the pointing object and the surface.

The invention also relates to a method for altering scale of a content displayed on a display by means of a user interaction arrangement for interaction with a user using a pointing object. The arrangement comprises: a detector for detecting a force from the object, a controller for computing a force value on a surface of a display, an content generating part for generating a content on the surface of display. The method comprises: computing a position on the surface based on the force value, and altering the scale of the content on the surface of display based on the position and force. In one embodiment, the force is an amount of pressure on the surface by the pointing object. In another embodiment, the force may also correspond to a distance between the pointing object and the surface. The force may a combination of applying a pressure on the surface and corresponding the force to a distance between the pointing object and the surface for a continues alternation of scale.

### BRIEF DESCRIPTION OF THE DRAWINGS

The accompanying drawings, which are incorporated in and constitute a part of this specification, illustrate an embodiment of the invention and, together with the description, explain the invention. In the drawings,
- Fig. 1: is a diagram of a known object detection system,
- Fig. 2: is a diagram of an exemplary implementation of a mobile terminal;
- Fig. 3: illustrates an exemplary functional diagram of the logic of a device according to present invention;
- Figs. 4 and 5: are flowcharts of exemplary processing;
- Fig. 6: is a graphical illustration of scale alternation process; and
- Fig. 7: is another diagram of a known object detection system.

### DETAILED DESCRIPTION

The following detailed description of the invention refers to the accompanying drawings. The same reference numbers in different drawings may identify the same or similar elements. Also, the following detailed description does not limit the embodiments.

Exemplary implementations of the embodiments will be described in the context of a mobile communication terminal. It should be understood that a mobile communication terminal is an example of a device that can employ a zooming consistent with the principles of the embodiments and should not be construed as limiting the types or sizes of devices or applications that can use implementations of providing position on a . A "device" as the term is used herein, is to be broadly interpreted to include devices having ability for 3D detection screen, such as a camera (e.g., video and/or still image camera) screen, and/or global positioning system (GPS) receiver; a personal communications system (PCS) terminal that may combine a cellular radiotelephone with data processing; a personal digital assistant (PDA); a laptop; and any other computation device capable of detecting force applied on the screen or a remote object, such as a personal computer, a home entertainment system, a television, etc.

The term three-dimensional (3D) relates to sensing or detection of a pressure or force applied by user parameter. The terms "pressure", "force" or "force/pressure parameter" as used herein relates to ability of sensing a real or imaginary force. "Real pressure or force" means detecting a pressure of a pointing object (finger (s), stylus, etc.) applying a force directly on the screen and "imaginary pressure force" means detecting an object on a remote position and distance in vicinity of the device's screen using a radio, electromagnetic or optical detection signal, which distance is interpreted as a pressure parameter, e.g. distance close to screen (e.g. with respect to a threshold value) larger force and remote from surface of the screen (e.g. with respect to a threshold value) lower force.

Thus, the invention according to a first aspect generally relates to using a signal for detecting real or imaginary pressure, as mentioned above, and providing a user a conveniently and safely zoom in (enlarge) and zoom out (reduce size) of at least a portion of a display content.

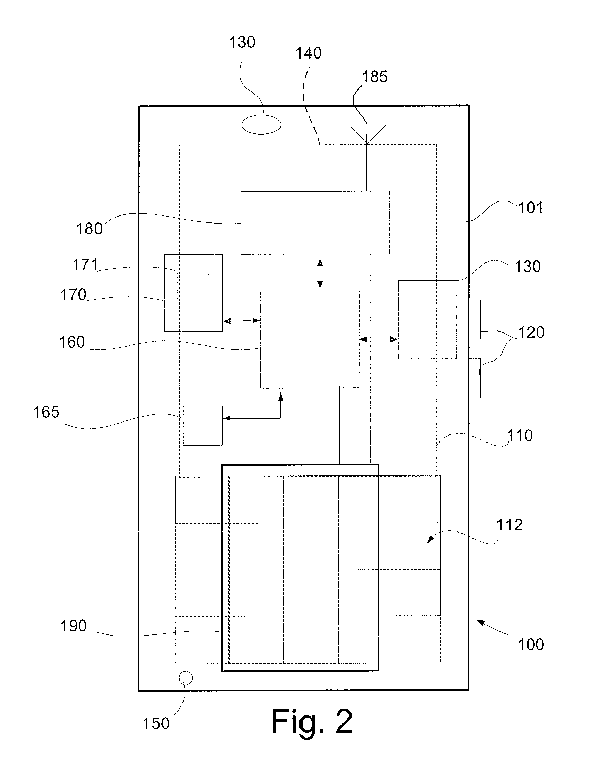

Fig. 2 is a diagram of an exemplary implementation of a mobile terminal consistent with the principles of the invention. Mobile terminal 100 (hereinafter terminal 100) may be a mobile communication device. As used herein, a "mobile communication device" and/or "mobile terminal" may include a radiotelephone; a personal communications system (PCS) terminal that may combine a cellular radiotelephone with data processing, a facsimile, and data communications capabilities; a personal digital assistant (PDA) that can include a radiotelephone, pager, Internet/intranet access, web browser, organizer, calendar, and/or global positioning system (GPS) receiver; and a laptop and/or palmtop receiver or other appliance that includes a radiotelephone transceiver.

The terminal 100, exemplified as a mobile phone, may include a housing 101, input area 110, control keys 120, speaker 130, display 140, and microphones 150. Housing 101 may include a structure configured to hold devices and components used in terminal 100. For example, housing 101 may be formed from plastic, metal, or composite and may be configured to support input area 110, control keys 120, speaker 130, display 140 and microphones 150. The input area may have a physical structure comprising a number of keys or may be integrated with the display in form of a touch-screen. The term "touch screen" as used herein implies a technology that may sense an object close to or on the surface of the screen.

The input area 110 may include devices and/or logic that can be used to display images to a user of terminal 100 and to receive user inputs in association with the displayed images. For example, a number of keys 112 may be displayed via input area 110 on the display. Implementations of input area 110 may be configured to receive a user input when the user interacts with keys 112 or the screen. For example, the user may provide an input to input area 110 directly, such as via the user's finger, or via other devices, such as a stylus. User inputs received via area 110 may be processed by components or devices operating in terminal 100.

Functions of the control keys 120, display 140, and speaker 130, microphone 150 are assumed well known for a skilled person and not described in detail.

As shown in Fig. 2, terminal 100 may further include processing logic 160, storage 165, user interface logic 170, which may include keypad logic (not shown) and input/output (I/O) logic 171, communication interface 180, antenna assembly 185, and power supply 190.

Processing logic 160 may include a processor, microprocessor, an application specific integrated circuit (ASIC), field programmable gate array (FPGA), or the like. Processing logic 160 may include data structures or software programs to control operation of terminal 100 and its components. Implementations of terminal 100 may use an individual processing logic component or multiple processing logic components (e.g., multiple processing logic 160 devices), such as processing logic components operating in parallel. Storage 165 may include a random access memory (RAM), a read only memory (ROM), a magnetic or optical disk and its corresponding drive, and/or another type of memory to store data and instructions that may be used by processing logic 160.

User interface logic 170 may include mechanisms, such as hardware and/or software, for inputting information to terminal 100 and/or for outputting information from terminal 100.

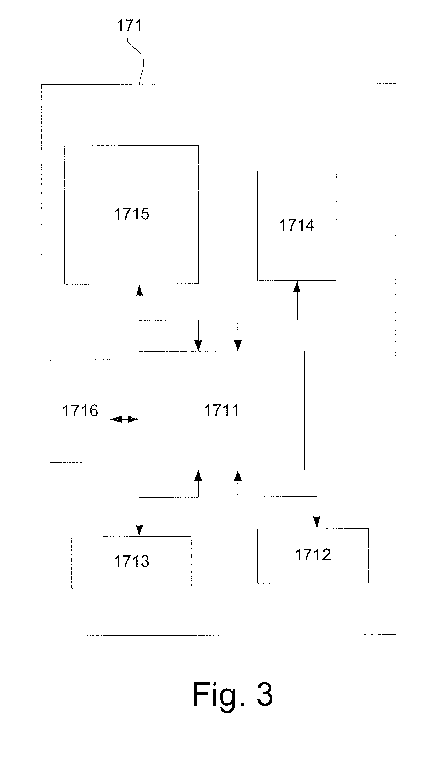

Keypad logic, if implemented, may include mechanisms, such as hardware and/or software, used to control the appearance of input area 110 (real or displayed) and to receive user inputs via input area. I/O logic 171 is described in greater detail below with respect to Fig. 3.

Input/output logic 171 may include hardware or software to accept user inputs to make information available to a user of terminal 100. Examples of input and/or output mechanisms associated with input/output logic 171 may include a speaker (e.g., speaker 130) to receive electrical signals and output audio signals, a microphone (e.g., microphone 150) to receive audio signals and output electrical signals, buttons (e.g., control keys 120) to permit data and control commands to be input into terminal 100, and/or a display (e.g., display 140) to output visual information.

Communication interface 180 may include, for example, a transmitter that may convert base band signals from processing logic 160 to radio frequency (RF) signals and/or a receiver that may convert RF signals to base band signals. Alternatively, communication interface 180 may include a transceiver to perform functions of both a transmitter and a receiver. Communication interface 180 may connect to antenna assembly 185 for transmission and reception of the RF signals. Antenna assembly 185 may include one or more antennas to transmit and receive RF signals over the air. Antenna assembly 185 may receive RF signals from communication interface 180 and transmit them over the air and receive RF signals over the air and provide them to communication interface 180. Power supply 190 may include one or more power supplies that provide power to components of terminal 100.

As will be described in detail below, the terminal 100, consistent with the principles described herein, may perform certain operations relating to providing inputs via interface area 110 or entire display in response to user inputs or in response to processing logic 160. Terminal 100 may perform these operations in response to processing logic 160 executing software instructions of an output configuration/reprogramming application contained in a computer-readable medium, such as storage 165. A computer-readable medium may be defined as a physical or logical memory device and/or carrier wave.

The software instructions may be read into storage 165 from another computer-readable medium or from another device via communication interface 180. The software instructions contained in storage 165 may cause processing logic 160 to perform processes that will be described later. Alternatively, hardwired circuitry may be used in place of or in combination with software instructions to implement processes consistent with the principles described herein. Thus, implementations consistent with the principles of the embodiments are not limited to any specific combination of hardware circuitry and software.

Fig. 3 illustrates an exemplary functional diagram of the I/O logic 171 of Fig. 2 consistent with the principles of the embodiments. I/O logic 171 may include control logic 1711, display logic 1712, illumination logic 1713, pressure sensing logic 1714 and zooming logic and sensor controller logic 1716, according to the invention.

Control logic 1711 may include logic that controls the operation of display logic 1712, and receives signals from pressure sensing logic 1714. Control logic 1711 may determine an action based on the received signals from pressure sensing logic 1714. The control logic 1711 may be implemented as standalone logic or as part of processing logic 160. Moreover, control logic 1711 may be implemented in hardware and/or software.

Display logic 1712 may include devices and logic to present information via display to a user of terminal 100. Display logic 1712 may include processing logic to interpret signals and instructions and a display device having a display area to provide information. Implementations of display logic 1712 may include a liquid crystal display (LCD) that includes, for example, biphenyl or another stable liquid crystal material.

Illumination logic 1713 may include logic to provide backlighting to a lower surface of display and input area 110 in order to display information associated with keys 112. Illumination logic 1713 may also provide backlighting to be used with LCD based implementations of display logic 1712 to make images brighter and to enhance the contrast of displayed images.

Pressure sensing logic 1714 may include logic that senses the position and/or presence of an object within the input area 110.

Implementations of pressure sensing logic 1714 are configured to sense the presence and location of an object in three dimensions, i.e. along X, Y and Z axes in a Cartesian coordinate system, where X and Y are along the plane of the display and Z substantially perpendicular to the XY-plane. The Z axis mat relate to a real force on surface or a distance to the object, as will be described further below. For example, pressure sensing logic 1714 may be configured to determine a location of a stylus or a finger of a user in the input area 110. Implementations of pressure sensing logic 1714 may use capacitive and/or resistive techniques or else to identify the presence of an object and to receive an input via the object.

Zooming logic 1715 may include mechanisms and logic to provide activation signal to a visual feedback element via control logic 1716, which when activated, provides a visual scale change of content on the display. For example, zooming logic 1715 may receive a signal from the pressure sensing logic 1714 or controller and in response to this signal, provide a signal to the display controller to display a content with varying scale.

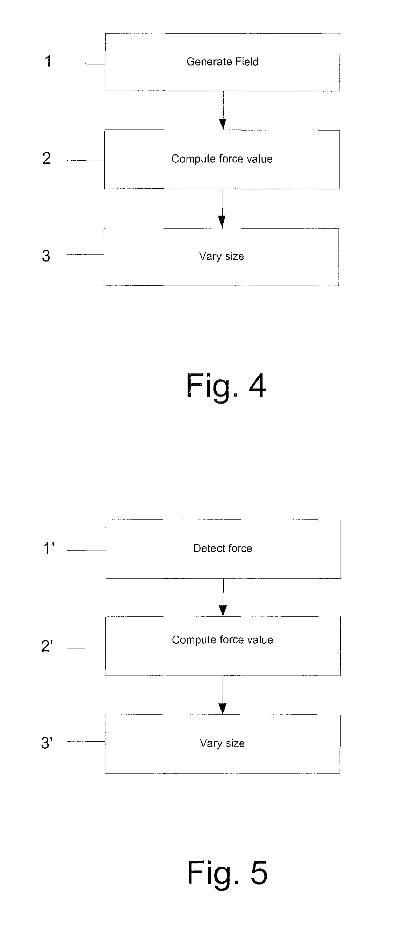

Returning now to Fig. 1 and in conjunction with Fig. 4, the electrodes 151 are controlled by a controller 154. The electrodes generate (1) electrical fields which can be effected by an object close enough to the detecting surface, a change in the e.g. capacitive coupling between the electrodes will be detected as the received signal strength will changes. By using, e.g. distance information from several electrodes xyz-coordinates of the object in the space above the electrodes can be determined. When the distance is determined it is interpreted to a pressure value (2). When the distance varies, the scale of the content is altered (3).

In one embodiment, a capacitive touch panel may include an insulating layer, a plurality of first dimensional conductive patterns, e.g. column conductive patterns, and a plurality of second dimensional conductive patterns, e.g. row conductive patterns. The column conductive patterns may be configured over an upper surface of the insulating layer and the row conductive patterns may be configured over a lower surface of the insulating layer. The column conductive patterns over the upper surface and the row conductive patterns over the lower surface form a vertical capacitance, and an ideal capacitance value may be obtained by adjusting the insulating layer. In addition, the column conductive patterns and the row conductive patterns may form horizontal capacitances respectively to achieve better detecting sensitivity. Therefore, a user touch may be sensed by detecting variance in capacitance values of the formed capacitance.

Clearly, other types of detection in a three-dimensional space may be used.

Returning now to Fig. 7 and in conjunction with Fig. 5, the sensors S1-S4 are controlled by a controller 30. The sensors effected by an object on the touch surface 10 detect (1') a force. When the force is determined, it is interpreted to a digital and/or analogue value (2'). When the force varies, the scale of the content is altered (3,).

Clearly, other types of pressure detection may be used.

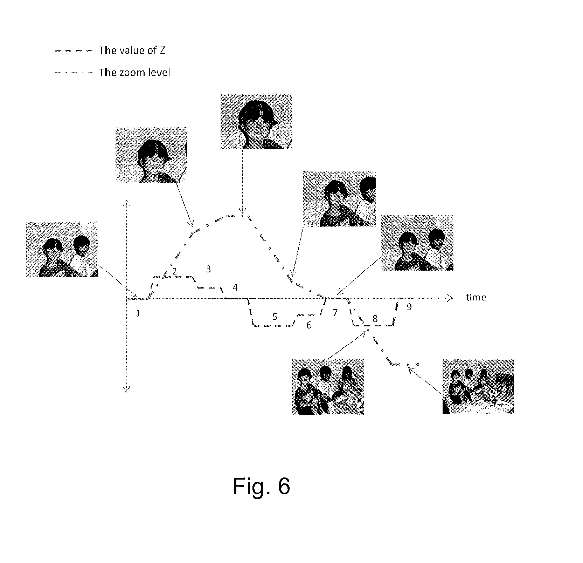

Graph of Fig. 6 illustrate one exemplary embodiment of the invention, showing the relation between the pressure applied and the scale alternation of the content displayed, i.e. a picture.

The figures shown on the graph relate to:
1) The pointing object rests on the display; no force is applied.
2) A pressure is applied (real or imaginary); the zooming speed is high
3) Less pressure is applied; the zooming speed is decreased.
4) No pressure is applied; the zooming level is constant (no change).
5) The pointing object is distanced from the display; the zoom out operation is carried out with relative high speed.
6) The pointing object is moved closer; the zoom out operation is slower.
7) The pointing object rests on the display; no force is applied and no change in zooming.
8) The pointing object is distanced and zooming out operation is started.
9) No force is applied; the zooming level is constant or no change in distance (no change).

When a force (as defined earlier) is applied to the screen with a pointing device, the sensor gives a value to the controller. This value may be represented by a variable Z. When no force is applied, i.e. Z = 0. This is the case when the pointing object rests on the display, with no force.

When the pointing object is removed either from on screen position, or no force is applied on the device and from space active above the device, zoom and/or distance level stay.

When force is applied the Z value increases and eventually reaches 1 (for example). When the positioning is activated and the object hovers above the display, the touch system provides a value to the controller. This value is represented with the same variable Z, and the variable will be negative.

Two embodiments may be exemplified:
The absolute zoom level is relative to the Z-value:
   When the user applies force to the display, the value of the zoom will be directly proportional to the pressure (Z) of the finger, or the distance (Z) between the display and the object when it is above the display.
The speed of the zoom is relative to the Z-value:
   By applying a small force (Z is small) to the display, the picture will zoom-in, slowly. By applying a larger force (Z is large) the speed of the zoom-in will be faster; and the opposite, when the object lifts from the display just slightly (Z is small and negative), the picture will zoom out slowly. When the object is moved further away (Z is large and negative) from the display, the speed of the zoom-out will be faster. As illustrated in the graph of Fig. 6.

The scale alternation on the display may be quantified or leveled to avoid user experiencing "shaky" zooming. This means that the scale change may be controlled in periods depending on the distance/pressure to the finger.

The foregoing description of preferred embodiments of the embodiments provides illustration and description, but is not intended to be exhaustive or to limit the embodiments to the precise form disclosed. Modifications and variations are possible in light of the above teachings or may be acquired from practice of the embodiments. While a series of acts has been described with regard to Figs. 4 - 6, the order of the acts, may be modified in other implementations consistent with the principles of the embodiments and/or acts may be complementary and/or removed. Further, non-dependent acts may be performed in parallel.

It will be apparent to one of ordinary skill in the art that aspects of the embodiments, as described above, may be implemented in many different forms of software, firmware, and hardware in the implementations illustrated in the figures. The actual software code or specialized control hardware used to implement aspects consistent with the principles of the embodiments is not limiting of the embodiments. Thus, the operation and behaviour of the aspects were described without reference to the specific software code, it being understood that one of ordinary skill in the art would be able to design software and control hardware to implement the aspects based on the description herein.

Further, certain portions of the embodiments may be implemented as "logic" that performs one or more functions. This logic may include hardware, such as hardwired logic, an application specific integrated circuit, a field programmable gate array or a microprocessor, software, or a combination of hardware and software.

It should be emphasized that the term "comprises/comprising" when used in this specification and/or claims is taken to specify the presence of stated features, integers, steps or components but does not preclude the presence or addition of one or more other features, integers, steps, components or groups thereof.

No element, act, or instruction used in the present application should be construed as critical or essential to the embodiments unless explicitly described as such. Also, as used herein, the article "a" is intended to include one or more items. Where only one item is intended, the term "one" or similar language is used. Further, the phrase "based on" is intended to mean "based, at least in part, on" unless explicitly stated otherwise.

## Claims

1. A user interaction arrangement (170) for interaction with a user using a pointing object, said arrangement comprising: a detector (151, 152, S1-S4) for detecting a force from said object, a controller (1711) for computing a force value on a surface of a display, an content generating part (1712) for generating a content on said surface of display, ***characterised in* that** the controller is further configured to compute a position on said surface based on said force value, and the image generating part is configured to alter scale of said content on said surface of display based on said position and force.

2. The arrangement of claim 1, wherein said force is an amount of pressure on said surface by said pointing object.

3. The arrangement of claim 1 or 2, wherein said force corresponds to a distance between said pointing object and said surface.

4. The arrangement according to claim 3, comprising a capacitive electric field generator and receiver.

5. The arrangement according to claim 3, comprising one or more pressure sensors.

6. The arrangement according to claim 1, for use in a mobile terminal having a touch sensitive display.

7. An electric device (100) comprising a display (140), a communication portion (180) and a user interaction arrangement (1711), the arrangement being configured to detect a pointing object for interaction with said device, a controller for computing a force value on said display, an image generating part (1712) for generating an image on said display, ***characterised in* that** the controller is further configured to compute a position on said surface based on said force value, and the image generating part is configured to alter scale of said content on said surface of display based on said position and force.

8. The device of claim 7, being one of a mobile communication terminal, a camera, a global positioning system (GPS) receiver; a personal communications system (PCS) terminal, a personal digital assistant (PDA); a personal computer, a home entertainment system or a television screen.

9. The device of claim 7, wherein said object is a finger or stylus.

10. The arrangement of claim 7, wherein said force is an amount of force on said surface by said pointing object.

11. The arrangement of claim 7 or 10, wherein said force corresponds to a distance between said pointing object and said surface.

12. A method for altering scale of a content displayed on a display by means of a user interaction arrangement (170) for interaction with a user using a pointing object, said arrangement comprising: a detector (151, 152, S1-S4) for detecting a force from said object, a controller (1711) for computing a force value on a surface of a display, an content generating part (1712) for generating a content on said surface of display, the method comprising: computing a position on said surface based on said force value, and altering said scale of said content on said surface of display based on said position and force.

13. The method of claim 12, wherein said force is an amount of pressure on said surface by said pointing object.

14. The method of claim 12 or 13, wherein said force corresponds to a distance between said pointing object and said surface.

15. The method according to any of claims 12-14, wherein said force is a combination of applying a pressure on said surface and corresponding said force to a distance between said pointing object and said surface for a continues alternation of scale.
